# EUROPÄISCHE PATENTSCHRIFT

(11) **EP 1 632 454 B1**
(45) Veröffentlichungstag und Bekanntmachung des Hinweises auf die Patenterteilung: **16.04.2008**
(21) Anmeldenummer: 05016140.5
(22) Anmeldetag: 26.07.2005
(51) Int. Cl.: B66F 9/24, B60L 7/22

(54) **Batteriebetriebenes Flurförderzeug**
Battery operated ground conveyor
Chariot convoyeur à piles

(30) Priorität: 30.08.2004 DE 102004042288
(43) Veröffentlichungstag der Anmeldung: 08.03.2006
(73) Patentinhaber: Jungheinrich Aktiengesellschaft, 22047 Hamburg (DE)
(72) Erfinder: Langlotz, Martin, 25365 Sparrieshoop (DE)
(74) Vertreter: Hauck Patent- und Rechtsanwälte

(56) Entgegenhaltungen:
- DE-A1- 10 244 769
- JP-A- 7 099 704

## Beschreibung

Die Erfindung bezieht sich auf ein batteriebetriebenes Flurförderzeug nach dem Oberbegriff des Patenanspruchs 1.

Batteriebetriebene Flurförderzeuge weisen mindestens zwei Antriebsaggregate auf, nämlich für den Fahrbetrieb und den Heben-/Senkenbetrieb des Lasttragmittels. Als Antriebsmotoren werden zumeist Drehstrommotoren verwendet, und der Antrieb des mindestens einen Antriebsrades und des Lasttragmittels erfolgt entweder direkt über einen Elektromotor oder ein vom Elektromotor angetriebenes Hydraulikaggregat. Für den Heben- und Senkenbetrieb treibt der Elektromotor eine Hydraulikpumpe an. Für den Fahrbetrieb treibt z.B. mindestens ein Elektromotor das Antriebsrad oder mehrere Antriebsräder unmittelbar oder über Getriebe an. Es ist ferner seit längerem bekannt, im Bremsbetrieb und/oder im Senkenbetrieb des Flurförderzeugs Energie rückzugewinnen und in die Batterie einzuspeisen. In diesen Fällen (Nutzbremsen bzw. Nutzsenken) arbeiten die Elektromotoren als Generatoren.

Im generatorischen Betrieb entstehen je nach Größe der Batterie, der Batterieart und der Menge der zurückgespeisten Energie Überspannungen. Diese Überspannungen treten zwar nur vorübergehend auf, z.B. für einige Sekunden, können aber für die elektronischen Komponenten der Steuer- oder Regelvorrichtung für die Antriebsmotoren oder auch für andere an die Batterie angeschlossenen Komponenten zerstörend wirken. Es ist daher obligatorisch, hierfür einen Schutz vorzusehen.

Es ist bekannt, im Falle von Überspannungen eine Notabschaltung vorzunehmen. Diese Maßnahme hat den Nachteil, daß die Verfügbarkeit des Flurförderzeugs verringert wird. Es ist ferner denkbar, zum Abbau von Überspannungen einen Verlustwiderstand einzubauen, über den dann die schädliche Energie abgebaut wird. Diese Maßnahme erhöht jedoch den Aufwand für die elektronischen Komponenten.

Aus DE 102 44 769 A1 ist bekannt, die beim Abbremsen einer mobilen Arbeitsmaschine entstehende elektrische Energie mindestens einem anderen elektrischen Antrieb zuzuführen.

Der Erfindung liegt daher die Aufgabe zugrunde, ein batteriebetriebenes Flurförderzeug zu schaffen, bei dem Überspannungen auf besonders einfache und wirksame Weise verringert werden.

Diese Aufgabe wird durch die Merkmale des Patentanspruchs 1 gelöst.

Bei dem erfindungsgemäßen Flurförderzeug ist eine Überspannungsschaltvorrichtung vorgesehen, die im Generatorbetrieb eines der Motoren den jeweils anderen Motor vorübergehend als Last zuschaltet, wenn eine Meßvorrichtung einen Zustand mißt, der als Überspannungszustand erkannt wird. In der Überspannungsschaltvorrichtung wird z.B. ein Schwellwert für die Spannung oder den Gradienten der Spannung vorgegeben, der oberhalb der maximalen Batteriespannung oder einem maximalen Gradienten liegt. Wird der Schwellwert erreicht, wird der jeweils andere Motor, der nicht generatorisch arbeitet, zugeschaltet und z.B. mit einer vorgegebenen Drehzahl angetrieben.

Die Erfindung geht von der Erkenntnis aus, daß im Falle eines generatorischen Betriebes eines der Motoren, z.B. beim Bremsen während der Fahrt oder Senken des Lasthilfsmittels der jeweils andere Motor keine Leistung erzeugen muß. Beim Senken einer Last steht das Flurförderzeug normalerweise still oder wird mit relativ geringer Geschwindigkeit bewegt, es wird jedoch hierbei nicht gebremst. Umgekehrt wird im Fahrbetrieb beim Bremsen normalerweise eine Last nicht abgesenkt. Dadurch steht der jeweils andere Motor, der nicht generatorisch in Betrieb ist, als Last für die Aufnahme der Überspannung zur Verfügung.

Die Aufschaltung des jeweils anderen Motors als Last erfolgt nur vorübergehend für einige Sekunden, bis die tatsächlich ermittelte Überspannung auf einen unteren Wert abgeklungen ist oder eine zu befürchtende Überspannung abgeklungen wäre. Daher erfolgt nach einer Ausgestaltung der Erfindung die Abschaltung des jeweils anderen Motors, wenn die an der Batterie anliegende Spannung einen Wert annimmt, der unterhalb des Schwellwerts für die Überspannung liegt. Es muß jedoch dafür gesorgt werden, daß der untere Wert so niedrig ist, daß er bei einem Sprung der Spannung nach Abschaltung des jeweils anderen Motors nicht wieder über den vorgegebenen Schwellwert geht, da anderenfalls es wieder zu einem Zuschalten des jeweils anderen Motors käme. Dieser Vorgang könnte sich sogar mehrfach wiederholen.

Wird der jeweils andere Motor drehend angetrieben, treibt er z.B. eine angekoppelte Hydraulikpumpe an. Daher ist nach einer Ausgestaltung der Erfindung vorgesehen, daß die Hydraulikpumpe im Überspannungsfall im drucklosen Umlauf geschaltet ist. Ein derartiger Betriebszustand ist jedoch für Hydraulikaggregate bei Flurförderzeugen an sich bekannt. Die hierbei erzeugte Last für den generatorisch betriebenen Motor reicht aus, die Überspannung in einem Maße abzubauen, daß elektronische Komponenten nicht mehr gefährdet sind.

Eine optimale Regelung für Elektromotoren, etwa bei Antriebsmotoren für Flurförderzeuge, besteht in einer sogenannten feldorientierten Regelung. Mit dieser ist es möglich, eine beliebige Unterteilung in Magnetisierungsstrom einerseits und momentenerzeugenden Strom andererseits vorzunehmen. Der Magnetisierungsstrom ist ein reiner Blindstrom, und die erfindungsgemäße Reduzierung der Überspannung kann in der Weise vorgenommen werden, daß die Regelung im Überspannungsfall einen hohen Magnetisierungsstrom für den jeweils anderen Motor erzeugt. Die Magnetisierung kann bis in die Sättigung getrieben werden, wobei der Momentenstrom einen Wert erreicht, der nicht mehr zu einem Antrieb der gekoppelten Pumpe reicht. In diesem Fall wirkt der jeweils andere Motor als reine Induktivität für die vorübergehende Aufnahme der Überspannung.

Alternativ kann auch vorgesehen werden, daß die Steuer- oder Regelvorrichtung des jeweils anderen Motors einen reinen Gleichstrom für den jeweils anderen Motor erzeugt. In diesem Fall wirkt der jeweils andere Motor als Induktivität, die mit Gleichstrom beschaltet wird. Nach einer Übergangszeit ist der Kurzschlußfall hergestellt. Da jedoch die Überspannung auf nur wenige Sekunden begrenzt ist, spielen thermische Probleme, die bei länger dauernden Einschaltzeiten auftreten könnten, keine wesentliche Rolle.

Die Erfindung weist einige wesentliche Vorteile auf. Sie ist ohne zusätzliche Hardware-Maßnahmen realisierbar, da die beschriebenen Schaltungsvorkehrungen über die ohnehin vorhandene Software und die ebenfalls vorhandene Leistungselektronik verwirklicht werden können. Da zusätzliche Hardware entfällt, ist auch kein zusätzlicher Einbauraum erforderlich. Es entfällt auch die Notwendigkeit, die die Überspannung erzeugende Komponente in ihrer Leistung zu reduzieren.

Die Erfindung wird nachfolgend anhand eines in Zeichnungen dargestellten Ausführungsbeispiels näher erläutert.
- Fig. 1: zeigt schematisch ein Flurförderzeug mit einer Vorkehrung nach der Erfindung.
- Fig. 2: zeigt sehr schematisch ein Blockbild der zwei im Flurförderzeug vorhandenen Antriebe.
- Fig. 3: zeigt im Diagramm den Verlauf einer Überspannung.

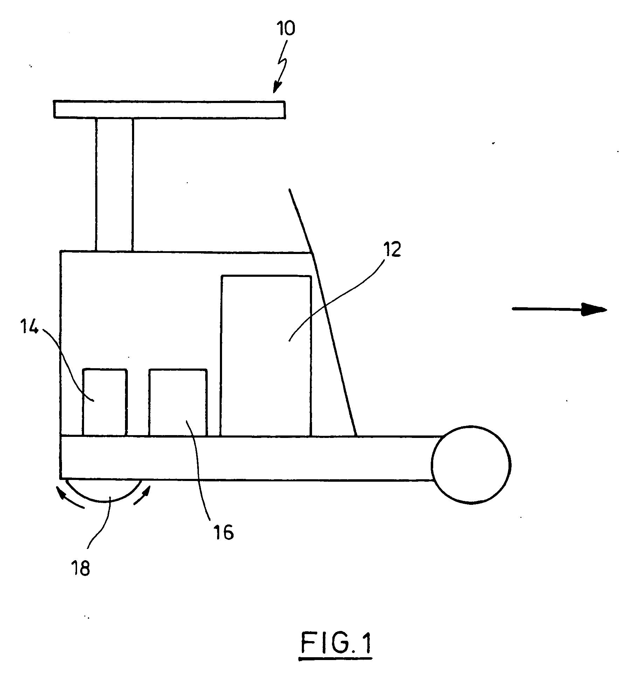

In Fig. 1 ist ein Flurförderzeug 10 schematisch angedeutet, wobei ein Mast für ein in der Höhe verstellbares Lasttragmittel nicht dargestellt ist. Das Flurförderzeug wird von einer Batterie 12 betrieben, wobei bei 14 ein Fahrantrieb und bei 16 ein Heben- und Senkenantrieb angeordnet ist. Mindestens ein hinteres Rad 18 dient als Antriebsrad. Beide Antriebe 14, 16 sind auch für den generatorischen Betrieb ausgerüstet, d.h. die Rückgewinnung der Bremsenergie am Rad 18 und der Energie beim bremsenden Absenken des Lasttragmittels und der Last.

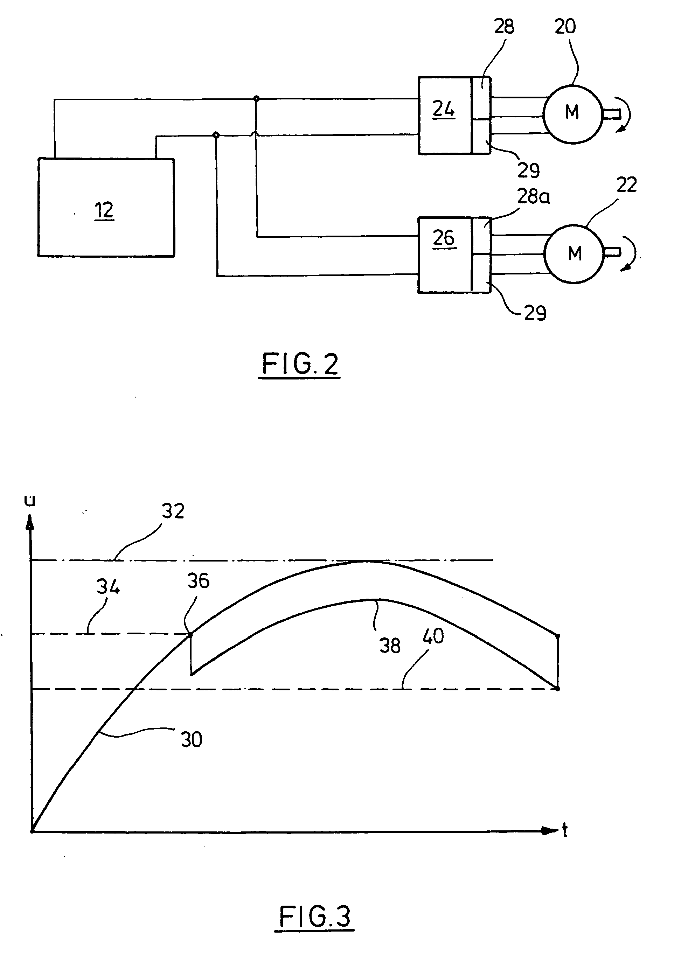

In Fig. 2 ist ein Antriebsmotor 20 für den Fahrantrieb 14 und ein Antriebsmotor 22 für den Heben- und Senkenantrieb 16 dargestellt. Sie sind über eine Regel- oder Steuervorrichtung 24 bzw. 26 an die Batterie 12 angeschlossen. Die Motoren 20, 22 sind als Drehstrommotoren dargestellt, es können auch Gleichstrommotoren vorgesehen werden. Die Regel- oder Steuervorrichtungen 24, 26 sind so ausgelegt, daß beim generatorischen Betrieb der Motoren 20, 22 elektrische Energie in die Batterie 12 eingespeist wird. Dabei kann es geschehen, daß Überspannungen auftreten, welche die elektronischen Komponenten der Vorrichtungen 24, 26 sowie weiterer Komponenten, die an die Batterie 12 angeschlossen sind, zerstören.

Den Steuer- oder Regelvorrichtungen 24, 26 sind nicht gezeigte Spannungsmeßvorrichtungen 29 zugeordnet, welche die Spannung an den Klemmen der Batterie 12 messen. Derartige Spannungsmeßvorrichtungen sind üblicherweise Bestandteil derartiger Vorrichtungen 24, 26. Ferner ist eine Überspannungsschaltvorrichtung 28, 28a vorgesehen, auf die jeweils das Signal der Spannungsmeßvorrichtungen gegeben wird. Wird eine Überspannung detektiert, wird die Steuer- und Regelvorrichtung des jeweils anderen Motors angesteuert, damit der jeweils andere Motor in Betrieb gesetzt wird. Er kann z.B. die zugehörige Pumpe im drucklosen Betrieb mit einer vorgegebenen Drehzahl antreiben. Es ist jedoch auch möglich, über die zugeordnete Steuer- oder Regelvorrichtung 24, 26 des jeweils anderen Motors 20, 22 den anderen Motor als Blindlast zu betreiben, indem er einen hohen Magnetisierungsstrom über eine feldorientierte Regelung erhält. Diese Schaltung des jeweils anderen Motors bildet eine Last für die Reduzierung der vorübergehend auftretenden Überspannung.

Die hardwaremäßige Schaltung, wie sie für derartige Anordnungen üblich ist, nämlich Leistungselektronik und Steuerteile dafür, braucht nicht verändert zu werden. Lediglich die Software, welche ebenfalls üblicherweise eingesetzt wird, benötigt einen zusätzlichen Programmteil zur Durchführung der Schaltvorgänge bei Auftreten oder Vermeidung von Überspannung.

In Fig. 3 ist ein Diagramm der Spannung N an der Batterie über der Zeit aufgetragen. Der Nullpunkt entspricht etwa der maximalen Batteriespannung nach vollständiger Aufladung. Sie beträgt z.B. 48 Volt. Bei 30 ist eine ansteigende und später wieder abfallende Kurve dargestellt, welche den möglichen Überspannungsverlauf beim generatorischen Betrieb eines der Motoren 20, 22 wiedergibt. Durch die strichpunktiert gezeichnete Linie 32 soll derjenige Spannungswert angedeutet werden, welcher zur Zerstörung von elektronischen Komponenten führen würde. Erfindungsgemäß ist bei 34 ein Spannungsschwellwert vorgegeben, ab dem die oben beschriebene Umschaltung stattfindet. Dies ist bei Punkt 36 der Fall. Die Überspannung wird sprunghaft reduziert und nimmt den bei 38 angegebenen Verlauf. Man erkennt, daß das Maximum des Kurvenstücks 38 deutlich unterhalb des Spannungswertes 32 liegt, ab dem die elektronischen Komponenten gefährdet sind. Bei einem Spannungswert 40 erfolgt die Abschaltung der zugeschalteten Last, wobei die Spannung wiederum sprunghaft ansteigt. Der nicht reduzierte weitere Verlauf der Kurve 30 hat jedoch einen Wert erreicht, der unterhalb des Schwellwerts 34 liegt, so daß eine Wiedereinschaltung vermieden ist.

## Patentansprüche

1. Batteriebetriebenes Flurförderzeug mit mindestens einem ersten Motor und mindestens einem zweiten Motor, die über je eine elektrische Steuer- oder Regelvorrichtung betrieben werden, die so ausgelegt sind, daß die Motoren als Generatoren betrieben werden können, um elektrische Energie in die Batterie zuückzuspeisen, **dadurch gekennzeichnet, daß** eine Überspannungsschaltvorrichtung (28, 28a) vorgesehen ist, die im Generatorbetrieb eines der Motoren (20, 22) den jeweils anderen Motor (22, 20) diesem vorübergehend als Last zuschaltet, wenn eine Meßvorrichtung (29) einen Zustand mißt, in dem eine Überspannung auftritt.

2. Flurförderzeug nach Anspruch 1, **dadurch gekennzeichnet, daß** die Steuer- oder Regelvorrichtungen der Motoren (20, 22) eine Leistungselektronik aufweisen und die Überspannungsschaltvorrichtung von den Leistungselektroniken gebildet ist.

3. Flurförderzeug nach Anspruch 1 oder 2, **dadurch gekennzeichnet, daß** die Meßvorrichtung die Generatorspannung oder die Batteriespannung mißt oder deren Verlauf (Gradient).

4. Flurförderzeug nach einem der Ansprüche 1 bis 3, **dadurch gekennzeichnet, daß** die Zuschaltung des jeweils anderen Motors (22, 20) beendet wird, wenn die an der Batterie anliegende Spannung einen Wert annimmt, der unterhalb eines Schwellwerts (34) für die Überspannung (30) liegt.

5. Flurförderzeug nach einem der Ansprüche 1 bis 4, **dadurch gekennzeichnet, daß** im Überspannungsfall eine vom jeweils anderen Motor (22, 20) angetriebene Pumpe auf drucklosen Umlauf geschaltet ist.

6. Flurförderzeug nach einem der Ansprüche 1 bis 5, **dadurch gekennzeichnet, daß** eine feldorientierte Regelung für die Motoren (20, 22) vorgesehen ist und die Regelung im Überspannungsfall einen hohen Magnetisierungsstrom für den jeweils anderen Motor (22, 20) erzeugt.

7. Flurförderzeug nach einem der Ansprüche 1 bis 6, **dadurch gekennzeichnet, daß** in der Steuer- oder Regelvorrichtung des jeweils anderen Motors (22, 20) ein Gleichstrom für den anderen Motor (22, 20) erzeugt wird.

## Claims

1. A battery operated industrial truck with at least one first motor and at least one second motor, which are operated by one electric control or regulation device for each motor, which are realised such that the motors can be operated as generators in order to feed back electric energy into the battery, **characterised in that** a device for switching excess voltage (28, 28a) is provided, which in the generator mode of one of the motors (20, 22) temporarily connects the respective other motor (22, 20) to it as a load when a measuring device (29) measures a condition in which an excess voltage occurs.

2. An industrial truck according to claim 1, **characterised in that** the control or regulation devices of the motors (20, 22) each have power electronics and that the device for switching excess voltage is constituted by the power electronics.

3. Industrial truck according to claim 1 or 2, **characterised in that** the measuring device measures the generator voltage or the battery voltage or the course (gradient) thereof.

4. Industrial truck according to any one of claims 1 to 3, **characterised in that** the connection of the respective other motor (22, 20) is ended when the voltage applied on the battery takes a value which is below a threshold value (34) for the excess voltage (30).

5. Industrial truck according to any one of claims 1 to 4, **characterised in that** in the case of excess voltage a pump, driven by the respective other motor (20, 22), is switched to unpressurized operation.

6. Industrial truck according to any one of claims 1 to 5, **characterised in that** a field-oriented regulation is provided for the motors (20, 22) and that the regulation generates a high magnetizing current for the respective other motor (22, 20) in the case of excess voltage.

7. Industrial truck according to any one of claims 1 to 6, **characterised in that** in the control or regulation device of the respective other motor (22, 20), a direct current for the other motor (22, 20) is generated.

## Revendications

1. Chariot de manutention au sol entraîné par batterie, comportant au moins un premier moteur et au moins un deuxième moteur, qui sont entraînés chacun par un dispositif de commande ou de régulation électrique, conçus de telle façon que les moteurs peuvent être entraînés comme générateurs pour stocker de nouveau de l'énergie électrique dans la batterie, **caractérisé en ce qu'**un dispositif de commutation de la surtension (28, 28a) est prévu, qui, lorsque l'un des moteurs (20, 22) fonctionne en générateur, enclenche temporairement en charge l'autre moteur (20, 22) quand un dispositif de mesure mesure un état dans laquelle apparaît une surtension.

2. Chariot de manutention au sol suivant la revendication 1, **caractérisé en ce que** les dispositifs de commande et de régulation des moteurs (20, 22) présentent une électronique de puissance et le dispositif de commutation de la surtension est formé par les électroniques de puissance.

3. Chariot de manutention au sol suivant la revendication 1 ou 2, **caractérisé en ce que** le dispositif de mesure mesure la tension de générateur ou la tension de batterie ou leur évolution (gradient).

4. Chariot de manutention au sol suivant l'une des revendications 1 à 3, **caractérisé en ce que** l'enclenchement de chaque autre moteur (20, 22) est terminé quand la tension appliquée à la batterie atteint une valeur qui se trouve en dessous d'une valeur de seuil (34) pour la surtension (30).

5. Chariot de manutention au sol suivant l'une des revendications 1 à 4, **caractérisé en ce qu'**en cas de surtension, une pompe entraînée par chaque autre moteur (22, 20) est enclenchée sur marche sans pression.

6. Chariot de manutention au sol suivant l'une des revendications 1 à 5, **caractérisé en ce qu'**une régulation orientée en champ pour les moteurs (20, 22) est prévue, et **en ce que** la régulation, en cas de surtension, produit un courant de magnétisation élevé pour chaque autre moteur (20, 22).

7. Chariot de manutention au sol suivant l'une des revendications 1 à 6, **caractérisé en ce que**, dans le dispositif de commande ou de régulation de chaque autre moteur (22, 20), est produit un courant continu pour l'autre moteur (22, 20).
